# EUROPEAN PATENT APPLICATION

(11) **EP 3 582 413 A1**
(43) Date of publication of application: **18.12.2019**
(21) Application number: 17896248.6
(22) Date of filing: 01.11.2017
(51) Int. Cl.: H04B 13/00, A61B 5/0488, G06F 3/01

(54) **COMMUNICATION DEVICE, COMMUNICATION CONTROL METHOD, AND PROGRAM**

(30) Priority: 07.02.2017 JP 2017020344
(71) Applicant: Sony Semiconductor Solutions Corporation, Atsugi-shi, Kanagawa 243-0014 (JP)
(72) Inventor: TANAKA, Katsuyuki, Atsugi-shi Kanagawa 243-0014 (JP)
(74) Representative: MFG Patentanwälte Meyer-Wildhagen Meggle-Freund Gerhard PartG mbB
(86) International application number: PCT/JP2017/039575
(87) International publication number: WO 2018/146874

(57) **Abstract**

To more accurately reflect a user's intention in the control of human body communication. A communication apparatus includes: a communication processing unit that enables communication with another communication apparatus via a human body of a user, the communication using an electrode; a signal detection unit that detects a biological signal of the human body from a signal input from the electrode; and a control unit that performs control over communication between the communication processing unit and the another communication apparatus, according to a result of the detection by the signal detection unit.

## Description

### TECHNICAL FIELD

The present disclosure relates to a communication apparatus, a communication control method, and a program.

### BACKGROUND ART

In recent years, a human body communication system also called a body area network (BAN) has been under study. The human body communication system includes a plurality of terminals located in proximity to the body of a user. Electrodes provided at the terminals cause an electric field to be distributed on the surface of a human body. This implements human body communication (electric field communication) between the terminals in the human body communication system.

With respect to the above-described electrode to be used as an antenna in human body communication, a technique for using the electrode also as an electrode for a touch sensor is disclosed in, for example, Patent Document 1.

### CITATION LIST

### PATENT DOCUMENT

Patent Document 1: Japanese Patent Application Laid-Open No. 2011-182279

### SUMMARY OF THE INVENTION

### PROBLEMS TO BE SOLVED BY THE INVENTION

In the human body communication system, it is possible for a terminal to detect signals transmitted from other terminals, by periodically controlling a reception process. The terminal may control the reception process on the basis of touch detection by a touch sensor. In this case, the frequency of performing the reception process is reduced. Therefore, it is possible to reduce power consumption for human body communication.

However, if touch detection by a touch sensor is used to control human body communication, there is a concern that control different from control intended by a user may be performed. For example, in a case where the user accidentally touches the touch sensor with no specific aim, control not intended by the user is performed.

Thus, the present disclosure proposes a new and improved communication apparatus, communication control method, and program capable of more accurately reflecting the user's intention in the control of human body communication.

### SOLUTIONS TO PROBLEMS

According to the present disclosure, there is provided a communication apparatus including: a communication processing unit that enables communication with another communication apparatus via a human body of a user, the communication using an electrode; a signal detection unit that detects a biological signal of the human body from a signal input from the electrode; and a control unit that performs control over communication between the communication processing unit and the another communication apparatus, according to a result of the detection by the signal detection unit.

Furthermore, according to the present disclosure, there is provided a communication control method including: detecting a biological signal of a human body from a signal input from an electrode; and causing a processor to perform control over communication with another communication apparatus via the electrode and the human body, according to a result of the detection of the biological signal.

Moreover, according to the present disclosure, there is provided a program for causing a computer to perform: detection of a biological signal of a human body from a signal input from an electrode; and control over communication with another communication apparatus via the electrode and the human body, according to a result of the detection of the biological signal.

### EFFECTS OF THE INVENTION

As described above, according to the present disclosure, it is possible to more accurately reflect a user's intention in the control of human body communication.

Note that the above-described effect is not necessarily restrictive, and any of the effects set forth in the present specification or another effect that can be derived from the present specification may be achieved together with or instead of the above-described effect.

### BRIEF DESCRIPTION OF DRAWINGS

Fig. 1 is an explanatory diagram showing a configuration of a human body communication system.
Fig. 2 is a schematic diagram of an appearance of a wearable terminal.
Fig. 3 is an explanatory diagram showing a wearable terminal configuration.
Fig. 4 is an explanatory diagram showing a relationship between the frequency band of myoelectric potential and the frequency band of a BAN signal.
Fig. 5 is an explanatory diagram showing a configuration of a BAN communication unit.
Fig. 6 is an explanatory diagram showing specific examples of signal processing by a myoelectric processing unit.
Fig. 7 is an explanatory diagram showing a change in the state of each constituent element, associated with a transition from a standby state to a BAN communication state.
Fig. 8 is a flowchart showing operation of the wearable terminal.
Fig. 9 is an explanatory diagram showing a configuration of a myoelectric processing unit according to a first application example.
Fig. 10 is an explanatory diagram showing a specific example of pattern recognition.
Fig. 11 is an explanatory diagram showing specific examples of other patterns of myoelectric potential.
Fig. 12 is a flowchart showing operation according to the first application example.
Fig. 13 is an explanatory diagram showing operation according to a second application example.
Fig. 14 is an explanatory diagram showing operation according to a third application example.
Fig. 15 is an explanatory diagram showing a configuration of a human body communication system according to a fourth application example.
Fig. 16 is an explanatory diagram showing a configuration of a locking device.
Fig. 17 is an explanatory diagram showing operation according to the fourth application example.
Fig. 18 is an explanatory diagram showing a hardware configuration of the wearable terminal.

### MODE FOR CARRYING OUT THE INVENTION

A preferred embodiment of the present disclosure will be described in detail below with reference to the accompanying drawings. Note that in the present specification and the drawings, the same reference numerals are assigned to constituent elements having substantially the same functional configurations, and redundant description will be thus omitted.

Furthermore, in the present specification and the drawings, there are cases where different alphabets are added after the same reference numerals assigned to a plurality of constituent elements having substantially the same functional configurations, so as to make the plurality of constituent elements distinguishable. However, in a case where it is not necessary to make a plurality of constituent elements having substantially the same functional configurations individually distinguishable in particular, the same reference numeral is simply assigned to each of the plurality of constituent elements.

Furthermore, the present disclosure will be described in the order of items listed below.
1. Outline of Human Body Communication System
2. Configuration of Wearable Terminal
3. Operation of Wearable Terminal
4. Application Examples
4-1. First Application Example
4-2. Second Application Example
4-3. Third Application Example
4-4. Fourth Application Example
5. Hardware Configuration
6. Conclusion

### <1. Outline of Human Body Communication System>

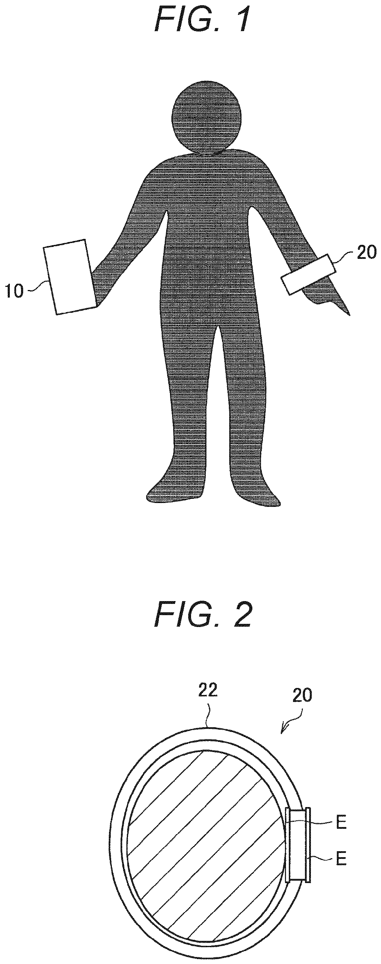

The embodiment of the present disclosure is applied to a human body communication system also called a body area network (BAN). The human body communication system is a system that uses a human body as a transmission medium for signals. The human body communication system includes a plurality of terminals located, for example, inside or on the surface of the human body. Electrodes provided at the terminals cause an electric field to be distributed on the surface of a human body. This implements BAN communication (human body communication) between the terminals in the human body communication system. Hereinafter, a specific configuration example of such a human body communication system will be described with reference to Fig. 1.

Fig. 1 is an explanatory diagram showing a configuration of a human body communication system. Fig. 1 shows a human body communication system including a portable terminal 10 and a wearable terminal 20.

The portable terminal 10 is a communication apparatus carried by a user. The portable terminal 10 is connected to the wearable terminal 20 via the body of the user, and communicates with the wearable terminal 20 via the body of the user. The portable terminal 10 includes a BAN communication unit for communication with the wearable terminal 20. The BAN communication unit includes at least two electrodes, a reception processing unit, a transmission processing unit, and the like. Note that a method of human body communication is not particularly limited, and it is possible to apply, for example, the standards of ISO/IEC 17982 (close capacitive coupling communication (CCCC)).

The wearable terminal 20 is a wristband communication apparatus. The wearable terminal 20 is connected to the portable terminal 10 via the body of the user, and communicates with the portable terminal 10 via the body of the user. The wearable terminal 20 includes a band 22 and two electrodes E to be attached to a wrist or an arm, as shown in Fig. 2. The electrodes E cause an electric field to be generated in the human body. In addition, reception signals indicating changes in the electric field generated in the human body are induced by the electrodes E. Thus, BAN communication using the electrodes E is implemented.

Note that typically, parallel flat plates form the two electrodes E. The sizes of the two electrodes E may be equal or different. Furthermore, the respective central axes of the two electrodes E may be identical or different. Moreover, the shapes of the electrodes E are not particularly limited. For example, the electrodes E may be formed in a rectangular shape, a circular shape, or a more complicated shape.

### (Background)

From the viewpoint of power consumption, it is not desirable to constantly enable the function of BAN communication in the wearable terminal 20 like this. In this regard, it is possible for a terminal to detect signals transmitted from other terminals, by periodically controlling a reception process. The terminal may control the reception process on the basis of touch detection by a touch sensor. In this case, the frequency of performing the reception process is reduced. Therefore, it is possible to reduce power consumption for BAN communication.

However, if touch detection by a touch sensor is used to control BAN communication, there is a concern that control different from control intended by a user may be performed. For example, in a case where the user accidentally touches the touch sensor with no specific aim, control not intended by the user is performed.

The inventors of the present invention have created the embodiment of the present disclosure, as a result of focusing on the above-described circumstances. According to the embodiment of the present disclosure, it is possible to more accurately reflect a user's intention in the control of BAN communication. Hereinafter, details of the configuration and operation of the embodiment of the present disclosure as described above will be described in sequence.

### <2. Configuration of Wearable Terminal>

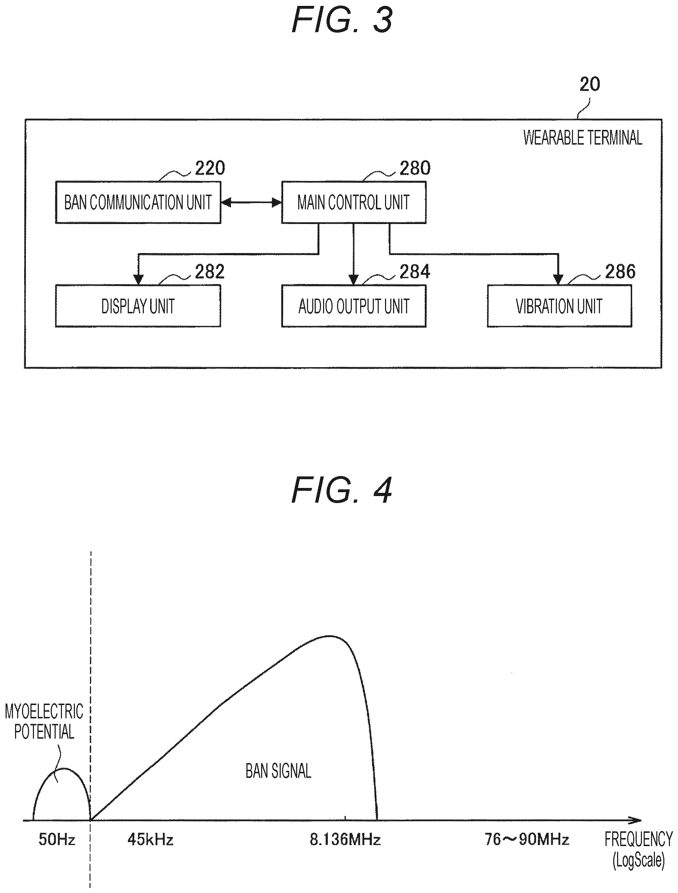

Fig. 3 is an explanatory diagram showing a configuration of the wearable terminal 20. As shown in Fig. 3, the wearable terminal 20 includes a BAN communication unit 220, a main control unit 280, a display unit 282, an audio output unit 284, and a vibration unit 286.

The main control unit (control unit) 280 controls the overall operation of the wearable terminal 20. The main control unit 280 controls, for example, screen display by the display unit 282, audio output by the audio output unit 284, and vibration of the vibration unit 286. Furthermore, the main control unit 280 also controls, for example, BAN communication to be performed by the BAN communication unit 220 and operation of applications.

The display unit 282 displays various screens under the control of the main control unit 280. For example, the display unit 282 may display a mail screen, a schedule screen, or an activity status display screen (for example, the number of steps, a heart rate, and a movement distance). The audio output unit 284 outputs sound or notification sound under the control of the main control unit 280. The vibration unit 286 vibrates under the control of the main control unit 280.

The BAN communication unit 220 includes the two electrodes E described with reference to Fig. 2. The BAN communication unit 220 has the function of performing BAN communication with another communication apparatus, such as the portable terminal 10, by use of the electrodes E. Moreover, the BAN communication unit 220 according to the present embodiment has the function of detecting a myoelectric potential.

Myoelectric potential is a biological signal generated in association with muscular contraction when a user moves his/her body. As shown in Fig. 2, in a case where the electrodes E are in close contact with a user's wrist by the band 22 tightly fastened around the user's wrist, reception signals induced by the electrodes E may include myoelectric potential. Therefore, the wearable terminal 20 can detect the myoelectric potential from the reception signals induced by the electrodes E. Here, a relationship between the frequency band of myoelectric potential and the frequency band of a BAN signal will be described with reference to Fig. 4.

Fig. 4 is an explanatory diagram showing a relationship between the frequency band of myoelectric potential and the frequency band of a BAN signal. As shown in Fig. 4, the frequency band of a BAN signal mainly belongs to the MHz band, while the frequency of myoelectric potential is in the KHz band at the highest. Therefore, the BAN signal and the myoelectric potential can be separated from the reception signals induced by the same electrodes E. Thus, the same electrodes E can be used for both detection of the myoelectric potential and BAN communication. In the present embodiment, an example is described in which the same electrodes E are used for both detection of a myoelectric potential and BAN communication. However, electrodes for detection of a myoelectric potential may be provided separately from electrodes for BAN communication.

Note that the user's action can also be detected by an acceleration sensor. However, an action of, for example, making a fist involves no movement at the position of the wrist. Thus, it is difficult to detect the action of making a fist, by use of the acceleration sensor provided on the wristband. Meanwhile, in a case where the user performs an action of making a fist, there occurs changes in the reception signals induced by the electrodes E included in the wearable terminal 20 according to the present embodiment. Therefore, it is possible to detect a myoelectric potential corresponding to the action of making a fist. Thus, it is possible to increase the range of user interfaces by utilizing detection of a myoelectric potential.

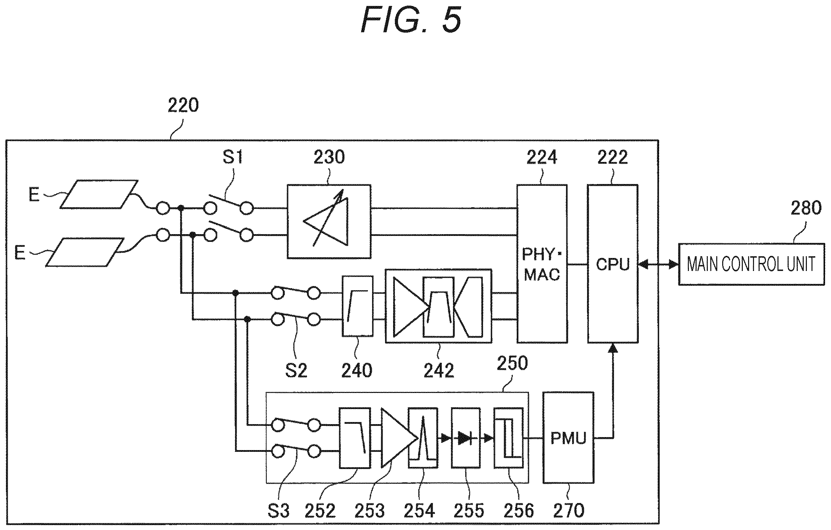

The configuration of the BAN communication unit 220 will be more specifically described below with reference to Fig. 5.

Fig. 5 is an explanatory diagram showing the configuration of the BAN communication unit 220. As shown in Fig. 5, the BAN communication unit 220 includes the electrodes E, a central processing unit (CPU) 222, a modem unit (PHY, MAC) 224, a transmission processing unit 230, a high-pass filter 240, a reception processing unit 242, a myoelectric processing unit 250, a power management unit (PMU) 270, and switches S1 and S2.

The CPU 222 controls operation of the BAN communication unit 220. Furthermore, transmission data are input from the main control unit 280 to the CPU 222. The CPU 222 supplies the input transmission data to the modem unit 224. Moreover, the CPU 222 outputs reception data input from the modem unit 224 to the main control unit 280. In addition, the CPU 222 has the function of controlling the starting and stopping of each constituent element in the BAN communication unit 220, as described later in detail.

The modem unit 224 has the function of modulating the transmission data supplied from the CPU 222 to generate modulation signals, and the function of demodulating signals supplied from the reception processing unit 242 to recover reception data.

The transmission processing unit 230 has the function of applying the modulation signals generated by the modem unit 224 to the electrodes E in a predetermined frequency band. Note that the switches S1 are provided between the transmission processing unit 230 and the electrodes E. Accordingly, in a case where the switches S1 are in the on position, the transmission processing unit 230 applies the modulation signals to the electrodes E.

The high-pass filter 240 extracts high-frequency components (for example, components in the MHz band or a higher frequency band) of reception signals input from the electrodes E. The extracted high-frequency components of the reception signals are supplied to the reception processing unit 242 provided at the subsequent stage. As described with reference to Fig. 4, the frequency band of a BAN signal is higher than the frequency band of myoelectric potential. Therefore, the high-frequency components of the reception signals, extracted by the high-pass filter 240, correspond to BAN signals. Note that the switches S2 are provided between the high-pass filter 240 and the electrodes E. Accordingly, in a case where the switches S2 are in the on position, the reception signals are input from the electrodes E to the high-pass filter 240.

The reception processing unit 242 performs a reception process on signals supplied from the high-pass filter 240, and supplies the signals processed in the reception process to the modem unit 224. The reception process may include, for example, amplification, downconversion, and analog-to-digital conversion.

### (Myoelectric Processing Unit)

The myoelectric processing unit 250 performs a process related to myoelectric potential on reception signals input from the electrodes E. As shown in Fig. 5, the myoelectric processing unit 250 includes switches S3, a low-pass filter 252, an amplification unit 253, a band-pass filter 254, a rectification unit 255, and a detection unit 256.

The low-pass filter 252 extracts low-frequency components (for example, components of 2 kHz or less) of the reception signals input from the electrodes E. As described with reference to Fig. 4, the frequency band of myoelectric potential is lower than the frequency band of a BAN signal. Therefore, the low-frequency components of the reception signals, extracted by the low-pass filter 252, correspond to myoelectric potential. Note that the switches S3 are provided between the low-pass filter 252 and the electrodes E. Accordingly, in a case where the switches S3 are in the on position, the reception signals are input from the electrodes E to the low-pass filter 252.

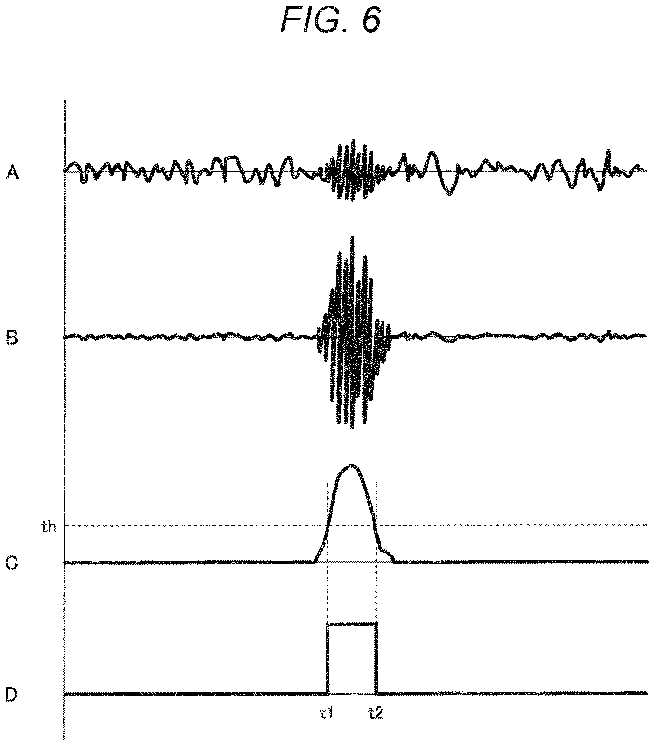

The amplification unit 253 amplifies signals supplied from the low-pass filter 252. The band-pass filter 254 reduces low-frequency noise of the signals amplified by the amplification unit 253. The rectification unit 255 forms an envelope of a signal supplied from the band-pass filter 254. The detection unit 256 functions as a signal detection unit that detects a myoelectric potential while the envelope exceeds a threshold. Specific examples of signal processing by the myoelectric processing unit 250 will be described below with reference to Fig. 6.

Fig. 6 is an explanatory diagram showing specific examples of signal processing by the myoelectric processing unit 250. A signal output from the amplification unit 253 is shown in A of Fig. 6. A signal output from the band-pass filter 254 is shown in B of Fig. 6. A signal output from the rectification unit 255 is shown in C of Fig. 6. A result of myoelectric potential detection by the detection unit 256 is shown in D of Fig. 6.

As shown in A of Fig. 6, low-frequency noise (mainly hum noise) remains in the signal output from the amplification unit 253. As the band-pass filter 254 reduces the low-frequency noise of the signal, the S/N of the myoelectric potential is improved as shown in B of Fig. 6. Then, when an envelope shown in C of Fig. 6 is obtained by the rectification unit 255, the detection unit 256 compares a threshold th with the envelope, and detects a myoelectric potential for a period from t1 to t2, in which the envelope reaches or exceeds the threshold th as shown in D of Fig. 6.

As described above, the myoelectric processing unit 250 can detect a myoelectric potential from the reception signals induced by the electrodes E.

### (Power Management Unit)

The power management unit 270 controls power supply to the CPU 222. For example, when a myoelectric potential is detected by the myoelectric processing unit 250 in a standby state of BAN communication in which the CPU 222 is not in operation and the myoelectric processing unit 250 is in operation, power is supplied to the CPU 222, that is, the CPU 222 is started. Here, myoelectric potential is generated in association with muscular contraction. Therefore, the CPU 222 is started on the basis of a user's action of, for example, making a fist.

### <3. Operation of Wearable Terminal>

The configuration of the wearable terminal 20 according to the embodiment of the present disclosure has been described above. Next, operation of the wearable terminal 20 according to the embodiment of the present disclosure will be described.

As described above, when a myoelectric potential is detected by the myoelectric processing unit 250 in the standby state of BAN communication, the CPU 222 is started. When the CPU 222 is started, the CPU 222 shifts the state of the BAN communication unit 220 to a BAN communication state. Specific examples of the state of each constituent element in each of the standby state and the BAN communication state will be described below.

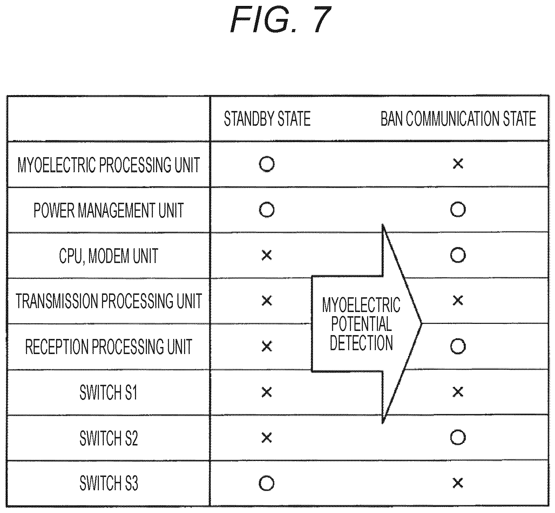

Fig. 7 is an explanatory diagram showing a change in the state of each constituent element, associated with a transition from the standby state to the BAN communication state. As shown in Fig. 7, the myoelectric processing unit 250 and the power management unit 270 are in operation, and the switches S3 are in the on position in the standby state. Meanwhile, the CPU 222, the modem unit 224, the transmission processing unit 230, and the reception processing unit 242 are not in operation, and the switches S1 and the switches S2 are in the off position. Power consumption is reduced by cessation of operation of the CPU 222, the modem unit 224, the transmission processing unit 230, and the reception processing unit 242 in the standby state.

The state of the BAN communication unit 220 shifts from the above-described standby state to the BAN communication state on the basis of detection of a myoelectric potential. As shown in Fig. 7, the CPU 222, the modem unit 224, the reception processing unit 242, and the power management unit 270 are in operation, and the switches S2 are in the on position in the BAN communication state. Meanwhile, the transmission processing unit 230 and the myoelectric processing unit 250 are not in operation, and the switches S1 and the switches S3 are in the off position. It is possible to perform BAN communication in the BAN communication state shown in Fig. 7 since the reception processing unit 242 is in operation.

Note that the BAN communication state shown in Fig. 7 corresponds to a BAN communication state on the listener side (receiving side). However, it is also possible to shift to a BAN communication state on the talker side (calling side). In the BAN communication state on the talker side, the transmission processing unit 230 is in operation, and an association sequence in, for example, ISO/IEC 17982 is performed. Furthermore, although Fig. 7 shows the BAN communication state in which the myoelectric processing unit 250 is not in operation, the myoelectric processing unit 250 may be in operation also in the BAN communication state. Power consumption can be reduced in a case where the myoelectric processing unit 250 is not in operation. In a case where the myoelectric processing unit 250 is in operation, a myoelectric potential can be detected also in the BAN communication state.

According to the present embodiment, there is performed control over communication between the BAN communication unit 220 and another communication apparatus (for example, the portable terminal 10) according to the result of myoelectric potential detection by the myoelectric processing unit 250, as described above. Specifically, the CPU 222 controls the starting of communication processing units, such as the modem unit 224 and the reception processing unit 242 (or the transmission processing unit 230), as control according to the myoelectric potential detection by the myoelectric processing unit 250. With such a configuration, the modem unit 224, the reception processing unit 242, and the like are started by a user's intention of moving a muscle. Thus, it is possible to more accurately reflect the user's intention in the control of the state of each constituent element than in a case of control based on, for example, touch detection by a touch sensor. As a result, it is possible to reduce power consumption for BAN communication. Note that the control of the state of each constituent element of the BAN communication unit 220 may be performed by the CPU 222 as described above, or may be performed by the main control unit 280.

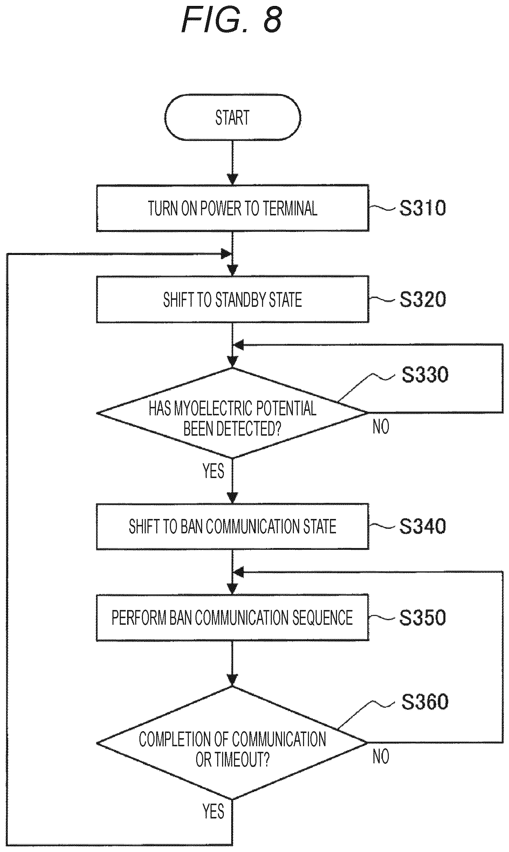

Next, the operation of the wearable terminal 20 will be digested with reference to Fig. 8.

Fig. 8 is a flowchart showing the operation of the wearable terminal 20. As shown in Fig. 8, when the power of the wearable terminal 20 is turned on (S310), the BAN communication unit 220 shifts to the standby state (S320). Thereafter, when a myoelectric potential is detected by the myoelectric processing unit 250 (S330/yes), the power management unit 270 starts the CPU 222, and the BAN communication unit 220 shifts to the BAN communication state under the control of the CPU 222 or the main control unit 280 (S340).

Then, the BAN communication unit 220 performs a BAN communication sequence with another communication apparatus (for example, the portable terminal 10) (S350). In a case of completion of communication or a timeout (S360/yes), the process returns to S320 and the BAN communication unit 220 shifts to the standby state. Note that in a case where the wearable terminal 20 is on the listener side, the BAN communication unit 220 waits for a BAN communication sequence in S350. Then, in a case where the BAN communication sequence is not performed, the BAN communication unit 220 shifts to the standby state due to a timeout.

### <4. Application Examples>

The embodiment of the present disclosure has been described above. The following describes some application examples of the embodiment of the present disclosure. Each application example to be described below may be implemented alone. Alternatively, a plurality of the application examples may be implemented in combination.

### (4-1. First Application Example)

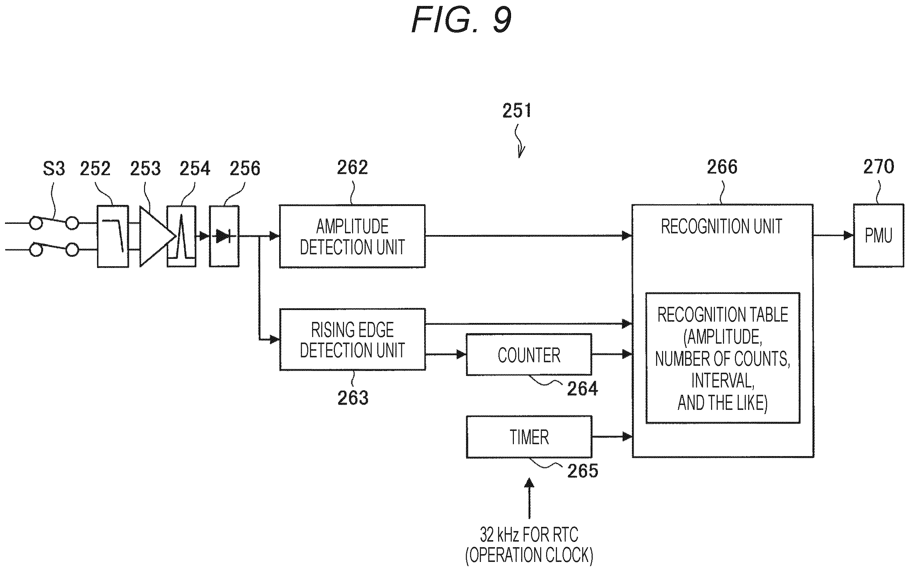

A first application example relates to a device for recognizing a pattern of a detected myoelectric potential and implementing control according to the recognized pattern. First, a configuration of a myoelectric processing unit 251 according to the present application example will be described with reference to Fig. 9. In the present application example, the myoelectric processing unit 251 has the function of recognizing a myoelectric pattern.

Fig. 9 is an explanatory diagram showing the configuration of the myoelectric processing unit 251 according to the first application example. As shown in Fig. 9, the myoelectric processing unit 251 according to the first application example includes an amplitude detection unit 262, a rising edge detection unit 263, a counter 264, a timer 265, and a recognition unit 266, in addition to switches S3, a low-pass filter 252, an amplification unit 253, a band-pass filter 254, and a rectification unit 255.

The amplitude detection unit 262 has the function of a signal detection unit that detects a myoelectric potential from an envelope formed by the rectification unit 255, and the function of detecting the amplitude of the myoelectric potential. Amplitude levels such as large, medium, and small may be provided in a stepwise manner, and the amplitude detection unit 262 may detect one of the amplitude levels corresponding to the amplitude of the myoelectric potential.

The rising edge detection unit 263 detects the rising edge of the envelope formed by the rectification unit 255. Note that the rising edge detection unit 263 may detect that the envelope has exceeded a threshold, as detection of the rising edge of the envelope.

The counter 264 counts the number of times the rising edge is detected by the rising edge detection unit 263 within a predetermined period of time. For example, if the rising edge is detected while counting is not performed, the counter 264 may count the number of times the rising edge is detected by the rising edge detection unit 263 in a time slot having a predetermined length of time from the detection, and finish the counting at the end of the time slot.

An operation clock (for example, 32 KHz for RTC) is supplied to the timer 265. The timer 265 performs clocking on the basis of the operation clock.

The recognition unit 266 recognizes a myoelectric pattern by using at least any one of the amplitude of a myoelectric potential input from the amplitude detection unit 262, a count value input from the counter, a time interval between two or more myoelectric potentials, or the duration time of each myoelectric potential. For example, the recognition unit 266 may include a recognition table in which amplitudes and count values are associated with pattern IDs, and may recognize a myoelectric pattern by comparing an amplitude and a count value input to the recognition unit 266 with the recognition table. Specific examples of pattern recognition will be described below.

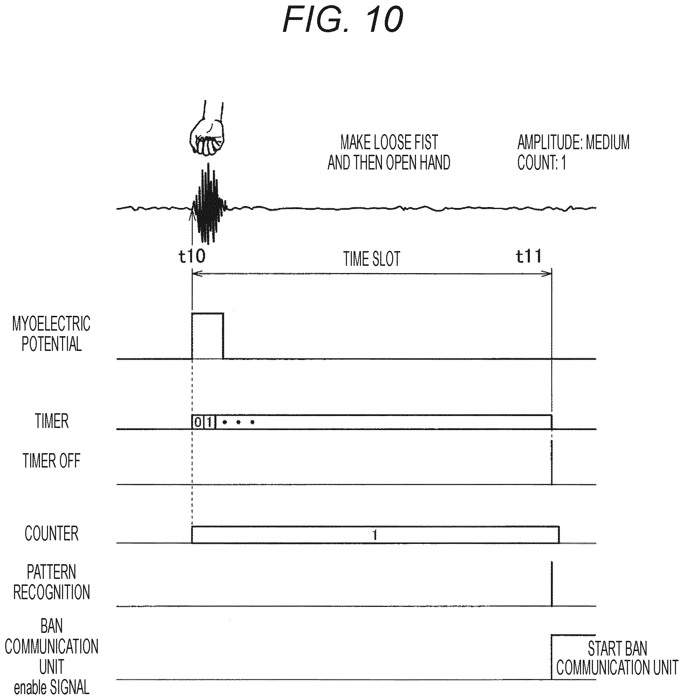

Fig. 10 is an explanatory diagram showing a specific example of pattern recognition. As shown in Fig. 10, in a case where a user makes a fist and then opens the hand, a myoelectric potential is detected at timing t10 at which the user makes a fist. Furthermore, the timer 265 starts measuring a predetermined time on the basis of the rising edge of the myoelectric potential at timing t10. Moreover, the counter 264 counts the number of times the rising edge of the myoelectric potential is detected before timing t11 at which the predetermined time elapses. As a result, recognition results corresponding to the amplitude "medium" and the count "1" are obtained at timing t11 at which the predetermined time elapses in the example shown in Fig. 10. When the pattern recognition results are obtained by the recognition unit 266, a CPU 222 outputs, for example, an enable signal for a BAN communication unit 220 as control according to the pattern recognition results, to start the BAN communication unit 220.

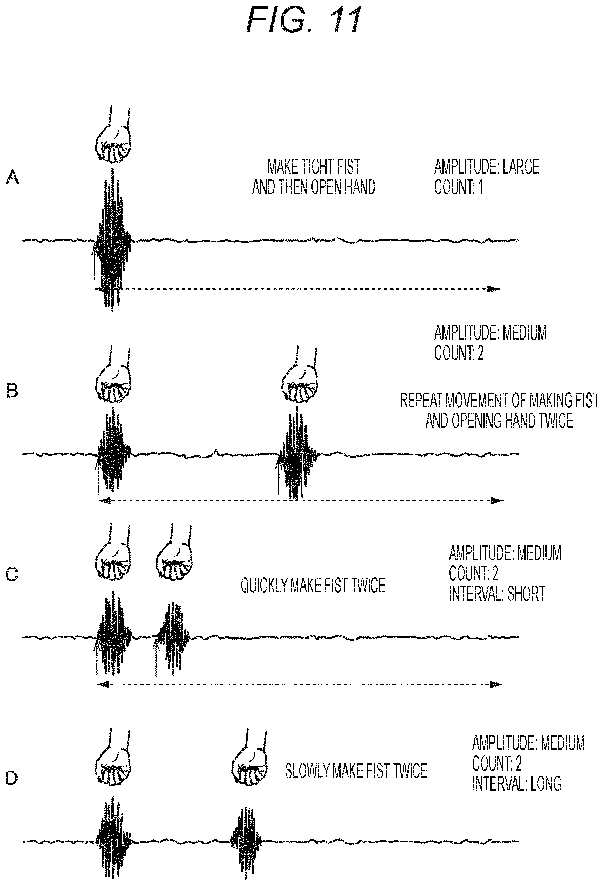

Fig. 11 is an explanatory diagram showing specific examples of other patterns of myoelectric potential. As shown in A of Fig. 11, in a case where the user makes a tight fist and then opens the hand, recognition results corresponding to the amplitude "large" and the count "1" are obtained. Furthermore, as shown in B of Fig. 11, in a case where the user repeats a movement of making a fist and opening the hand twice, recognition results corresponding to the amplitude "medium" and the count "2" are obtained.

Moreover, it is also possible to use a time interval between two or more myoelectric potentials for pattern recognition. For example, as shown in C of Fig. 11, in a case where the user quickly makes a fist twice, recognition results corresponding to the amplitude "medium", the count "2", and the interval "short" are obtained. Meanwhile, in a case where the user slowly makes a fist twice, recognition results corresponding to the amplitude "medium", the count "2", and the interval "long" are obtained. Furthermore, the duration time of each myoelectric potential can also be used for pattern recognition. Thus, it is possible to recognize more diverse patterns by also using the duration time of each myoelectric potential for pattern recognition.

According to the first application example as described above, various recognition results can be obtained for myoelectric patterns. Therefore, it is possible for the user to implement various control according to the movement of muscles by associating different control details with respective recognition results.

For example, a first pattern may be associated with the starting of communication processing units such as a modem unit 224 and a reception processing unit 242. In addition, a second pattern may be associated with the stopping of the communication processing units such as the modem unit 224 and the reception processing unit 242. Furthermore, a third pattern may be associated with a movement on the listener side, and a fourth pattern may be associated with a movement on the talker side. Moreover, a myoelectric pattern may be associated with a communication condition such as a transmission rate or transmission intensity.

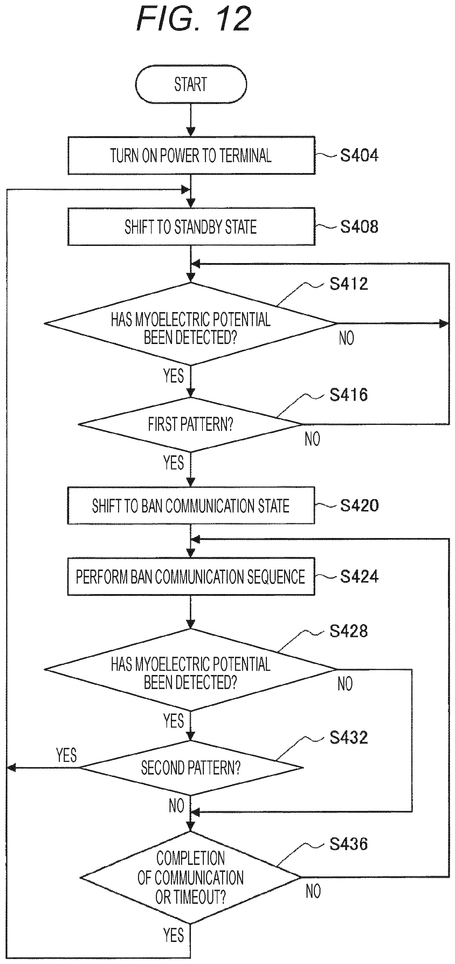

Hereinafter, operation according to the first application example described above will be digested with reference to Fig. 12.

Fig. 12 is a flowchart showing operation according to the first application example. As shown in Fig. 12, when the power of a wearable terminal 20 is turned on (S404), the BAN communication unit 220 shifts to a standby state (S408). Thereafter, when detecting a myoelectric potential (412/yes), a myoelectric processing unit 250 recognizes a pattern of the myoelectric potential. Here, in a case where a result of the myoelectric pattern recognition corresponds to the first pattern (S416/yes), a power management unit 270 starts the CPU 222, and the BAN communication unit 220 shifts to a BAN communication state under the control of the CPU 222 or a main control unit 280 (S420).

Then, the BAN communication unit 220 performs a BAN communication sequence with another communication apparatus (for example, a portable terminal 10) (S424). In a case where meanwhile, a myoelectric potential is detected by the myoelectric processing unit 250 (S428/yes) and a result of pattern recognition of the myoelectric potential corresponds to the second pattern (S432/yes), the process returns to S408 and the BAN communication unit 220 shifts to the standby state. In a case where a myoelectric potential corresponding to the second pattern is not detected (S432/no), the BAN communication sequence is continued. In a case of completion of communication or a timeout (S436/yes), the process returns to S408 and the BAN communication unit 220 shifts to the standby state.

Note that although an example of associating a myoelectric pattern with communication-related control has been described above, the myoelectric pattern may be associated with other control. The myoelectric pattern may be associated with, for example, the type of application to be activated by the main control unit 280, operation control of the application, or screen display control.

Furthermore, the myoelectric pattern recognition result may be transmitted to another communication apparatus through BAN communication. Then, the another communication apparatus may perform control according to the myoelectric pattern recognition result. With such a configuration, a user of the wearable terminal 20 can implement control of another communication apparatus by an action of moving a muscle.

### (4-2. Second Application Example)

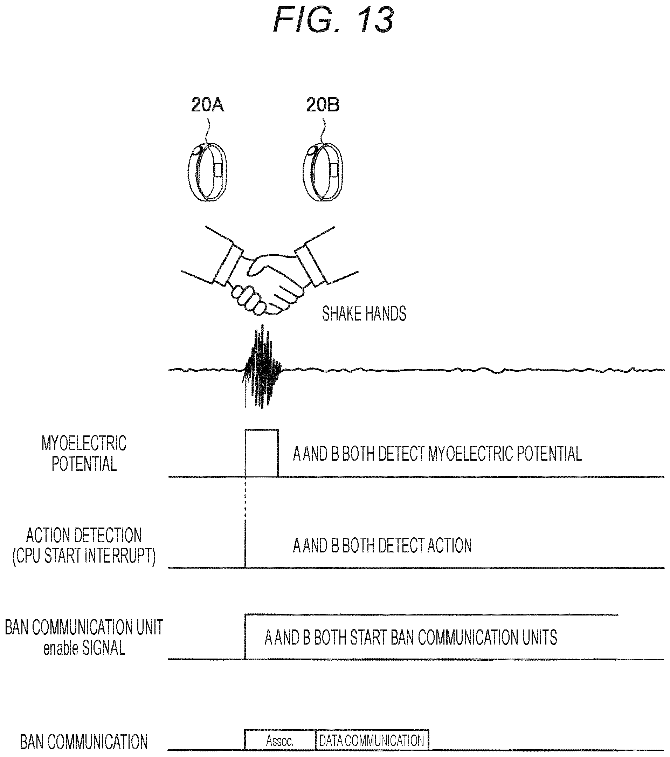

Next, a second application example will be described. The second application example relates to communication to be performed when two users wearing wearable terminals 20 shake hands. Described below with reference to Fig. 13 is a specific example of the communication to be performed when the two users wearing the wearable terminals 20 shake hands.

Fig. 13 is an explanatory diagram showing operation according to the second application example. As shown in Fig. 13, when a user wearing a wearable terminal 20A and a user wearing a wearable terminal 20B shake hands, both the wearable terminal 20A and the wearable terminal 20B detect a myoelectric potential. As a result, an action of shaking hands is detected, and a power management unit 270 starts a CPU 222 accordingly.

Then, a BAN communication unit 220 of each of the wearable terminal 20A and the wearable terminal 20B is started by the CPU 222. As a result, BAN communication (association and data communication) is started between the wearable terminal 20A and the wearable terminal 20B.

Thus, BAN communication is started on the basis of detection of the myoelectric potential from both of the two users. Therefore, it is possible to avoid causing BAN communication to be started simply by unintentional and incidental contact between the two users.

Note that data to be transmitted and received in BAN communication based on a handshake are not particularly limited. For example, business card data stored in each wearable terminal 20 may be transmitted and received in BAN communication based on a handshake. Furthermore, in BAN communication based on a handshake with a celebrity at a handshake session, data showing a past record of a handshake with the celebrity may be transmitted from the wearable terminal 20 on the celebrity side.

### (4-3. Third Application Example)

Next, a third application example will be described. In a case where control based on detection of a myoelectric potential is started, it is desirable to enable a user to recognize the start of the control. If a user cannot recognize the start of the control, there is a concern that an unintentional movement made by the user may cause the control based on the detection of the myoelectric potential to be performed before the user is aware thereof. For example, it is not desirable from the viewpoint of power consumption that undesired BAN communication be performed, and it is not desirable that an application not intended by a user be executed, either. The third application example relates to a device for enabling a user to recognize that control based on detection of a myoelectric potential has started.

When performing control or the like of BAN communication or an application on the basis of myoelectric potential detection by a BAN communication unit 220, a main control unit 280 according to the third application example causes a notification unit, such as a display unit 282, an audio output unit 284, or a vibration unit 286, to notify a user of execution of the control. For example, execution of control of BAN communication or an application is notified by means of screen display by the display unit 282, output of notification sound by the audio output unit 284, or vibration of the vibration unit 286. Notification by the notification unit such as the display unit 282, the audio output unit 284, or the vibration unit 286 may be continued for a specific period of time. The user can recognize the start of the control based on the detection of a myoelectric potential, on the basis of the notification.

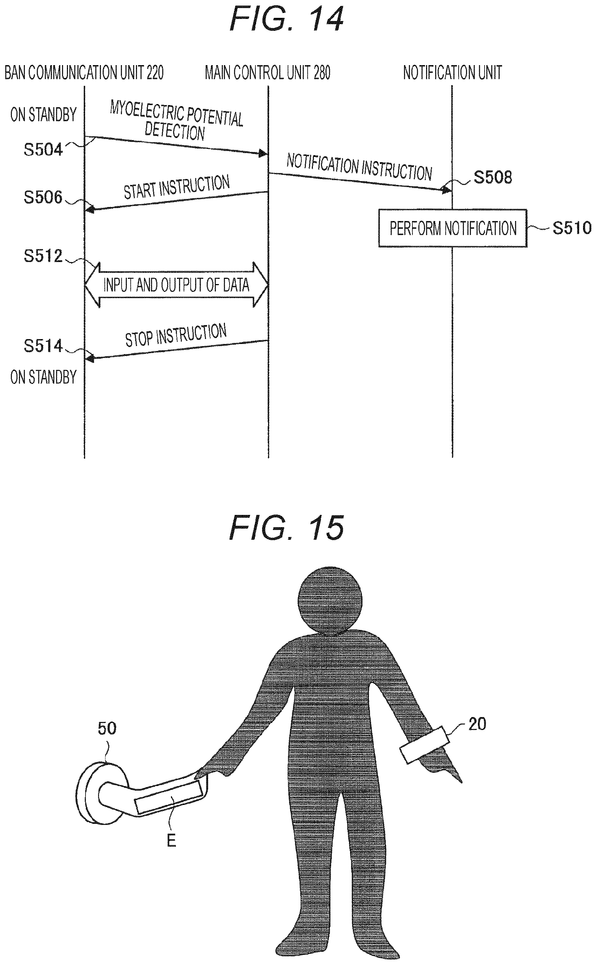

Fig. 14 is an explanatory diagram showing operation according to the third application example. As shown in Fig. 14, when a myoelectric potential is detected while the BAN communication unit 220 is in a standby state (S504), the main control unit 280 causes the BAN communication unit 220 to shift to a BAN communication state according to a start instruction (S506). Furthermore, the main control unit 280 instructs the notification unit such as the display unit 282, the audio output unit 284, or the vibration unit 286 to perform notification of the start of BAN communication (S508). Then, notification is performed according to the instruction (S510).

Thereafter, input and output of data regarding BAN communication are performed between the BAN communication unit 220 and the main control unit 280. Then, the main control unit 280 causes the BAN communication unit 220 to shift to the standby state by a stop instruction on the basis of completion of communication or a timeout. (S514).

Note that an example of performing notification of the start of BAN communication has been described above. However, in a case where an application is activated or a predetermined operation is performed on the basis of detection of a myoelectric potential, the display unit 282, the audio output unit 284, or the vibration unit 286 may notify a user that the application has been activated or the predetermined operation has been performed.

As described above, according to the third application example, it is possible for a user to recognize that control based on detection of a myoelectric potential has started.

### (4-4. Fourth Application Example)

Next, a fourth application example will be described. The fourth application example relates to application of the embodiment of the present disclosure to the unlocking or locking of a door.

Fig. 15 is an explanatory diagram showing a configuration of a human body communication system according to the fourth application example. As shown in Fig. 15, the human body communication system according to the fourth application example includes a wearable terminal 20 and a locking device 50.

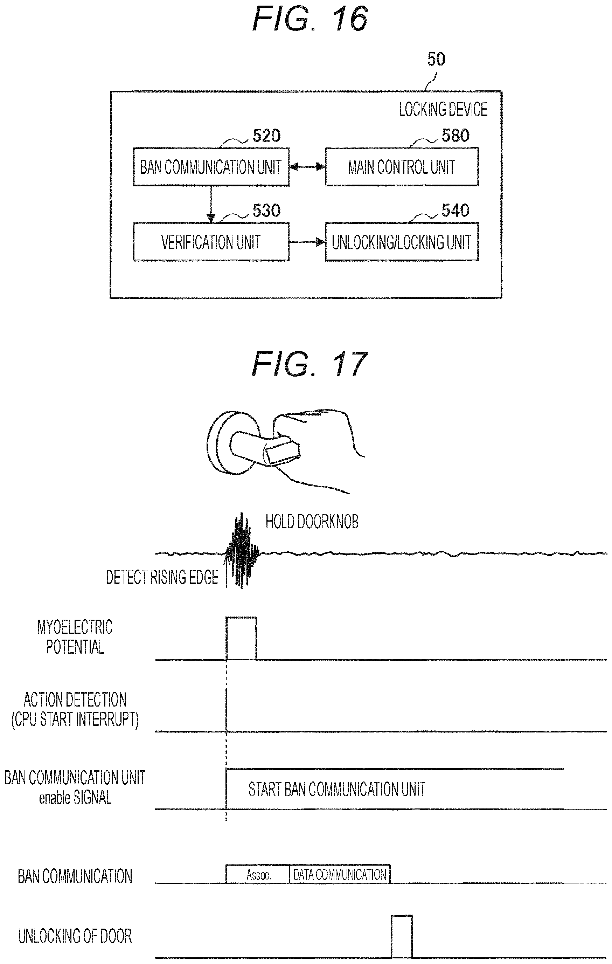

The locking device 50 has the function of locking or unlocking a door. Furthermore, the locking device 50 is a communication apparatus including an electrode E provided on, for example, a doorknob which is an operation member of the door, as shown in Fig. 15. Therefore, the locking device 50 can perform BAN communication with the wearable terminal 20 worn by a user via the electrode E while the user is touching the doorknob. The configuration of the locking device 50 will be more specifically described below with reference to Fig. 16.

Fig. 16 is an explanatory diagram showing the configuration of the locking device 50. As shown in Fig. 16, the locking device 50 includes a BAN communication unit 520, a main control unit 580, a verification unit 530, and an unlocking/locking unit 540.

The function of the BAN communication unit 520 is substantially the same as the function of a BAN communication unit 220 of the wearable terminal 20. In other words, the BAN communication unit 520 has a myoelectric potential detection function and a BAN communication function, and shifts from a standby state to a BAN communication state on the basis of detection of a myoelectric potential.

The main control unit 580 controls the overall operation of the locking device 50. In the fourth application example, the main control unit 580 controls BAN communication between the locking device 50 and the wearable terminal 20 to be performed after the BAN communication unit 520 shifts to the BAN communication state, on the basis of detection of a myoelectric potential. For example, the wearable terminal 20 according to the fourth application example may store authentication information for the unlocking or locking of a door by the locking device 50, and the main control unit 580 may cause the BAN communication unit 520 to request the authentication information from the wearable terminal 20.

The verification unit 530 verifies the authentication information received from the wearable terminal 20. For example, the verification unit 530 may store a public key of a user having valid authority, and may verify, by using the public key, whether or not the authentication information is information signed with a private key of the user having the valid authority. Alternatively, the verification unit 530 may store one or more terminal IDs as authentication information, and may perform verification on the basis of whether or not a terminal ID received as authentication information from the wearable terminal 20 matches the stored terminal ID.

The unlocking/locking unit 540 unlocks or locks the door in a case where verification by the verification unit 530 is successful. For example, the unlocking/locking unit 540 may include a drive motor, and may rotate a thumbturn on the basis of driving force generated by the drive motor.

Fig. 17 is an explanatory diagram showing operation according to the fourth application example. As shown in Fig. 17, when a user wearing the wearable terminal 20 holds the doorknob, the locking device 50 detects a myoelectric potential. As a result, an action of holding the doorknob is detected, and the BAN communication unit 520 is started accordingly.

Then, the BAN communication unit 520 requests authentication information from the wearable terminal 20, and receives the authentication information from the wearable terminal 20. The verification unit 530 verifies the received authentication information. If the verification of the authentication information is successful, the unlocking/locking unit 540 unlocks the door.

Thus, according to the fourth application example, the door is unlocked or locked by an explicit action of holding the doorknob. Therefore, it is possible to avoid causing the door to be unlocked or locked simply by a user's hand incidentally touching the doorknob.

Note that a right-handed user is assumed to hold the doorknob with the right hand. In a case where the right-handed user wears the wearable terminal 20 on the left wrist, the user cannot cause the BAN communication unit 220 of the wearable terminal 20 to be started simply by holding the doorknob with the right hand. In this case, the user can start both the BAN communication unit 220 of the wearable terminal 20 and the BAN communication unit 520 of the locking device 50 by holding the doorknob with the right hand while holding the left hand.

As a variation, the wearable terminal 20 according to the fourth application example may maintain the BAN communication state regardless of detection of a myoelectric potential. With such a configuration, a user can cause the wearable terminal 20 and the locking device 50 to communicate, by holding the doorknob with either hand. Alternatively, the wearable terminal 20 may transmit the presence or absence of a detected myoelectric potential to the locking device 50 together with authentication information. In this case, the locking device 50 can lock or unlock the door on the basis of the fact that the myoelectric potential has also been detected in the wearable terminal 20, in addition to success in the authentication information.

### <5. Hardware Configuration>

The embodiment of the present disclosure has been described above. Information processing such as the start-up control and the communication control described above is implemented by software in cooperation with hardware of the wearable terminal 20 to be described below.

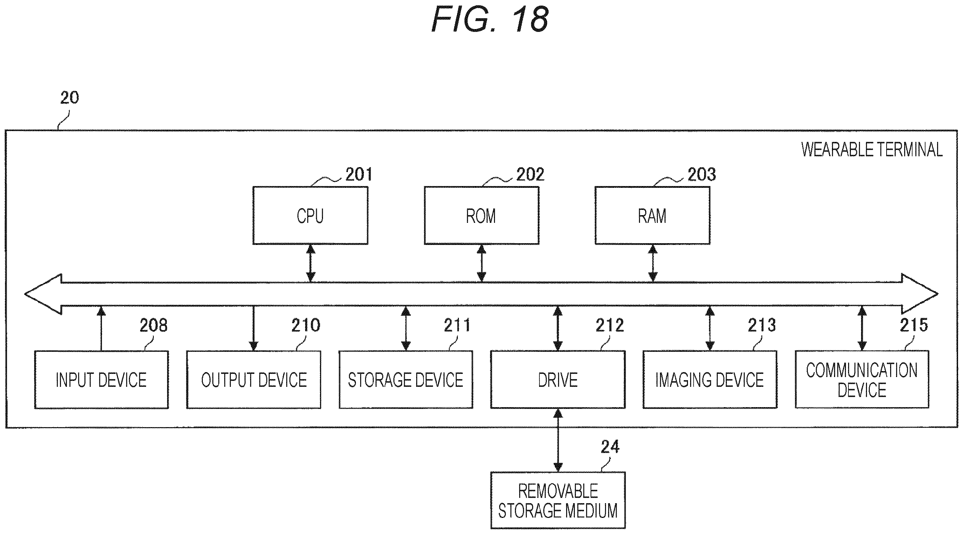

Fig. 18 is an explanatory diagram showing a hardware configuration of the wearable terminal 20. As shown in Fig. 18, the wearable terminal 20 includes a central processing unit (CPU) 201, a read only memory (ROM) 202, a random access memory (RAM) 203, an input device 208, an output device 210, a storage device 211, a drive 212, an imaging device 213, and a communication device 215.

The CPU 201 functions as an arithmetic processing unit and a control device, and controls the overall operation in the wearable terminal 20 according to various programs. Furthermore, the CPU 201 may also be a microprocessor. The ROM 202 stores programs, operation parameters, and the like to be used by the CPU 201. The RAM 203 temporarily stores, for example, programs to be used by the CPU 201 to perform control and parameters that appropriately change while the control is performed. These are connected to each other by a host bus including a CPU bus and the like. The function of the main control unit 280 described with reference to, for example, Fig. 3 is implemented by the CPU 201, the ROM 202, and the RAM 203 in cooperation with software.

The input device 208 includes input means, an input control circuit, and the like. The input means are used by a user to input information. Examples of the input means include a mouse, a keyboard, a touch panel, a button, a microphone, a switch, and a lever. The input control circuit generates an input signal on the basis of an input by the user, and outputs the input signal to the CPU 201. The user of the wearable terminal 20 can input various data to the wearable terminal 20 and instruct the wearable terminal 20 to perform processing operations, by operating the input device 208.

For example, the output device 210 includes display devices such as a liquid crystal display (LCD) device, an organic light emitting diode (OLED) device, and a lamp. Moreover, the output device 210 includes audio output devices such as a speaker and headphones. For example, the display device displays a captured image, a generated image, and the like. Meanwhile, the audio output devices convert audio data and the like into sound, and output the sound.

The storage device 211 is a device for data storage, configured as an example of a storage unit of the wearable terminal 20 according to the present embodiment. The storage device 211 may include, for example, a storage medium, a recording device that records data in the storage medium, a read-out device that reads data from the storage medium, and a deletion device that deletes the data recorded in the storage medium. The storage device 211 stores programs to be executed by the CPU 201 and various data.

The drive 212 is a reader/writer for a storage medium, and is built into or externally attached to the wearable terminal 20. The drive 212 reads information recorded in a removable storage medium 24 such as a semiconductor memory, and outputs the read information to the RAM 203. Furthermore, the drive 212 can also write information in the removable storage medium 24.

The imaging device 213 includes an imaging optical system and a signal conversion element such as a charge coupled device (CCD) or a complementary metal oxide semiconductor (CMOS). The imaging optical system includes a photographing lens, a zoom lens, and the like for condensing light. The imaging optical system condenses light emitted from a subject to form a subject image in a signal conversion unit. The signal conversion element converts the formed subject image into an electrical image signal.

The communication device 215 is a communication device for performing BAN communication. Furthermore, the communication device 215 may also include a communication device for performing other communication such as a wireless local area network (LAN) or long term evolution (LTE).

Note that hardware configurations of the portable terminal 10 and the locking device 50 may be substantially the same as the hardware configuration of the wearable terminal 20. Therefore, description of the hardware configurations of the portable terminal 10 and the locking device 50 will be omitted.

### <6. Conclusion>

According to the present embodiment, there is performed control over communication between the BAN communication unit 220 and another communication apparatus (for example, the portable terminal 10) according to the result of myoelectric potential detection by the myoelectric processing unit 250, as described above. Specifically, the CPU 222 controls the starting of communication processing units, such as the modem unit 224 and the reception processing unit 242 (or the transmission processing unit 230), as control according to the myoelectric potential detection by the myoelectric processing unit 250. With such a configuration, the modem unit 224, the reception processing unit 242, and the like are started by a user's intention of moving a muscle. Thus, it is possible to more accurately reflect the user's intention in the control of the state of each constituent element than in a case of control based on, for example, touch detection by a touch sensor. As a result, it is possible to reduce power consumption for BAN communication.

Note that although the preferred embodiment of the present disclosure has been described in detail with reference to the accompanying drawings, the technical scope of the present disclosure is not limited to such an example. It will be apparent to a person having ordinary skill in the art of the present disclosure that various changes or modifications can be conceived within the scope of the technical idea described in the claims. It is understood that, of course, such changes or modifications are also within the technical scope of the present disclosure.

For instance, an example of controlling BAN communication on the basis of detection of a myoelectric potential has been described above. However, the myoelectric potential is merely an example of a biological signal. Thus, BAN communication may be controlled on the basis of detection of other biological signals. For example, the above-described control of BAN communication may be implemented on the basis of detection of other biological signals such as brain waves, respiration, heartbeat, blood pressure, body temperature, and muscle sound, instead of the myoelectric potential.

Furthermore, each step in, for example, the process to be performed by the wearable terminal 20 in the present specification need not necessarily be performed in chronological order as shown in a sequence diagram or the flowchart. For example, each step in the process to be performed by the wearable terminal 20 may be performed in order different from the order shown in the flowchart, or may be performed in parallel.

In addition, it is also possible to create a computer program for causing hardware such as the CPU, the ROM, and the RAM built into the wearable terminal 20, to fulfill a function equivalent to that of each constituent element of the wearable terminal 20 described above. Furthermore, there is also provided a storage medium storing the computer program.

Moreover, the effects described in the present specification are merely explanatory or illustrative, and not restrictive. That is, the technology according to the present disclosure can achieve other effects obvious to those skilled in the art from the description of the present specification, together with or instead of the above-described effects.

Furthermore, the following configurations are also within the technical scope of the present disclosure.
(1) A communication apparatus including:
   a communication processing unit that enables communication with another communication apparatus via a human body of a user, the communication using an electrode;
   a signal detection unit that detects a biological signal of the human body from a signal input from the electrode; and
   a control unit that performs control over communication between the communication processing unit and the another communication apparatus, according to a result of the detection by the signal detection unit.
(2) The communication apparatus according to (1) above, in which the control unit controls starting or stopping of the communication processing unit according to the result of the detection by the signal detection unit.
(3) The communication apparatus according to (1) or (2) above, further including:
   a recognition unit that recognizes a pattern of the biological signal detected by the signal detection unit,
   in which the control unit performs control over the communication between the communication processing unit and the another communication apparatus, according to a result of the recognition by the recognition unit, as the control according to the result of the detection by the signal detection unit.
(4) The communication apparatus according to (3) above, in which the control unit starts the communication processing unit on the basis of a fact that a first recognition result has been obtained by the recognition unit.
(5) The communication apparatus according to any one of (1) to (4) above, in which the control unit stops operation of the signal detection unit while the communication processing unit is in operation.
(6) The communication apparatus according to (3) or (4) above, in which the control unit stops operation of the communication processing unit on the basis of a fact that a second recognition result has been obtained by the recognition unit.
(7) The communication apparatus according to (3) or (4) above, in which the recognition unit recognizes the pattern of the biological signal by using at least any one of a time interval between two or more biological signals, a relationship between intensities of the two or more biological signals, a number of the biological signals detected within a predetermined period of time, or a duration time of the biological signal.
(8) The communication apparatus according to (3) or (4) above, in which the control unit causes the communication processing unit to transmit, to the another communication apparatus, a signal according to the result of the recognition by the recognition unit.
(9) The communication apparatus according to any one of (1) to (8) above, in which
   the electrode is provided on an operation member of a door, and
   the communication processing unit performs a process for communication between the electrode and a communication apparatus carried by the user.
(10) The communication apparatus according to (4) above, in which in association with execution of the control according to the result of the detection by the signal detection unit, the control unit controls notification of the execution of the control to the human body.
(11) The communication apparatus according to (10) above, in which the user perceives the notification through vibration, sound, or display.
(12) A communication control method including:
   detecting a biological signal of a human body from a signal input from an electrode; and
   causing a processor to perform control over communication with another communication apparatus via the electrode and the human body, according to a result of the detection of the biological signal.
(13) A program for causing a computer to perform:
   detection of a biological signal of a human body from a signal input from an electrode; and
   control over communication with another communication apparatus via the electrode and the human body, according to a result of the detection of the biological signal.

### REFERENCE SIGNS LIST

- 10: Portable terminal
- 20: Wearable terminal
- 22: Band
- 50: Locking device
- 220: Communication unit
- 222: CPU
- 224: Modem unit
- 224: Modem unit
- 230: Transmission processing unit
- 240: High-pass filter
- 242: Reception processing unit
- 250: Myoelectric processing unit
- 251: Myoelectric processing unit
- 252: Low-pass filter
- 253: Amplification unit
- 254: Band-pass filter
- 255: Rectification unit
- 256: Detection unit
- 262: Amplitude detection unit
- 263: Detection unit
- 264: Counter
- 265: Timer
- 266: Recognition unit
- 270: Power management unit
- 280: Main control unit
- 282: Display unit
- 284: Audio output unit
- 286: Vibration unit
- 520: Communication unit
- 530: Verification unit
- 540: Locking unit
- 580: Main control unit

## Claims

1. A communication apparatus comprising:
a communication processing unit that enables communication with another communication apparatus via a human body of a user, the communication using an electrode;
a signal detection unit that detects a biological signal of the human body from a signal input from the electrode; and
a control unit that performs control over communication between the communication processing unit and the another communication apparatus, according to a result of the detection by the signal detection unit.

2. The communication apparatus according to claim 1, wherein the control unit controls starting or stopping of the communication processing unit according to the result of the detection by the signal detection unit.

3. The communication apparatus according to claim 1, further comprising:
a recognition unit that recognizes a pattern of the biological signal detected by the signal detection unit,
wherein the control unit performs control over the communication between the communication processing unit and the another communication apparatus, according to a result of the recognition by the recognition unit, as the control according to the result of the detection by the signal detection unit.

4. The communication apparatus according to claim 3, wherein the control unit starts the communication processing unit on a basis of a fact that a first recognition result has been obtained by the recognition unit.

5. The communication apparatus according to claim 1, wherein the control unit stops operation of the signal detection unit while the communication processing unit is in operation.

6. The communication apparatus according to claim 3, wherein the control unit stops operation of the communication processing unit on a basis of a fact that a second recognition result has been obtained by the recognition unit.

7. The communication apparatus according to claim 3, wherein the recognition unit recognizes the pattern of the biological signal by using at least any one of a time interval between two or more biological signals, a relationship between intensities of the two or
more biological signals, a number of the biological signals detected within a predetermined period of time, or a duration time of the biological signal.

8. The communication apparatus according to claim 3, wherein the control unit causes the communication processing unit to transmit, to the another communication apparatus, a signal according to the result of the recognition by the recognition unit.

9. The communication apparatus according to claim 1, wherein
the electrode is provided on an operation member of a door, and
the communication processing unit performs a process for communication between the electrode and a communication apparatus carried by the user.

10. The communication apparatus according to claim 4, wherein in association with execution of the control according to the result of the detection by the signal detection unit, the control unit controls notification of the execution of the control to the human body.

11. The communication apparatus according to claim 10, wherein the user perceives the notification through vibration, sound, or display.

12. A communication control method comprising:
detecting a biological signal of a human body from a signal input from an electrode; and
causing a processor to perform control over communication with another communication apparatus via the electrode and the human body, according to a result of the detection of the biological signal.

13. A program for causing a computer to perform:
detection of a biological signal of a human body from a signal input from an electrode; and
control over communication with another communication apparatus via the electrode and the human body, according to a result of the detection of the biological signal.
